# EUROPÄISCHE PATENTSCHRIFT

(11) **EP 0 440 150 B1**
(45) Veröffentlichungstag und Bekanntmachung des Hinweises auf die Patenterteilung: **18.11.1993**
(21) Anmeldenummer: 91101102.1
(22) Anmeldetag: 29.01.1991
(51) Int. Cl.: B65G 47/53

(54) **Fördereinrichtung für Holzerzeugnisse**
Conveyor installation for wood products
Installation de transport pour produits en bois

(30) Priorität: 02.02.1990 DE 4003024
(43) Veröffentlichungstag der Anmeldung: 07.08.1991
(73) Patentinhaber: Wurster u. Dietz GmbH u. Co. Maschinenfabrik, D-72072 Tübingen (DE)
(72) Erfinder:
(74) Vertreter: Witte, Alexander, Dr.-Ing.

(56) Entgegenhaltungen:
- DE-A- 3 225 121
- DE-A- 3 418 801
- GB-A- 1 420 970

## Beschreibung

Die Erfindung betrifft eine Fördereinrichtung für Holzerzeugnisse mit mindestens einer flachen Seite, insbesondere Bretter, mit einem Querförderer und einem Längsförderer, deren Förderrichtungen in einer horizontalen Ebene einen Winkel von im wesentlichen 90° miteinander bilden, wobei der Querförderer in Förderrichtung stromaufwärts des Längsförderers angeordnet ist, die Holzerzeugnisse quer zu deren Längsausdehnung fördert und sie in einer Übergabestation an den Längsförderer übergibt.

Fördereinrichtungen der vorstehend genannten Art sind aus dem Dokument DE-U-89 14 111 bekannt. Sie werden z.B. auch in Sägewerksanlagen verwendet, um Holzerzeugnisse von einer Bearbeitungsstation zu einer nächsten Bearbeitungsstation zu befördern.

Im Rahmen der vorliegenden Erfindung sollen unter Holzerzeugnissen solche verstanden werden, die mindestens eine flache Seite aufweisen. Typischerweise handelt es sich dabei um Bretter oder Model, die mittels eines Kreissägeaggregates oder einer Gattersäge aus einem Baumstamm herausgeschnitten wurden und nun über den Querförderer und den Längsförderer einem weiteren Sägeaggregat zum Besäumen, d.h. zum Abtrennen der Waldkanten, zugeführt werden sollen. Es ist jedoch auch möglich, mit der erfindungsgemäßen Fördereinrichtung andere Holzerzeugnisse mit flacher Seite, z.B. angeflachte Baumstämme oder Holzprofile mit quadratischem oder sonstigem Querschnitt zu fördern, je nachdem, wie dies im Einzelfall erforderlich sein sollte.

Bei den Fördereinrichtungen der hier interessierenden Art findet, wie bereits erwähnt, ein Wechsel in der Förderrichtung um 90° statt. Dies liegt daran, daß die Bretter auf dem Querförderer in einer Richtung, die rechtwinklig zu ihrer Längsausdehnung verläuft, gefördert werden, um dann in der Übergabestation auf den Längsförderer zu gelangen, der die Bretter in ihrer Längsrichtung der Besäumsäge zuführt. Während also die Bretter auf dem Querförderer mit ihren Längsseiten mehr oder weniger nahe nebeneinanderliegen, liegen sie auf dem Längsförderer mit ihren Schmalseiten dicht voneinander beabstandet. Um dies zu bewerkstelligen, ist eine Zeittaktsteuerung erforderlich, die das jeweils "vorne" liegende Brett vom Querförderer auf den Längsförderer dann übergibt, wenn das jeweils vorher übergebene Brett bereits soweit auf dem Längsförderer abgefördert ist, daß der Längsförderer zur Aufnahme des nächsten Bretts wieder frei ist.

Es hat sich in der Praxis herausgestellt, daß diese Übergabe vom Querförderer auf den Längsförderer aus mannigfaltigen Gründen schwer beherrschbar ist, so daß an dieser Stelle der Fördereinrichtung die Gesamt-Förderleistung begrenzt wird, weil man aus Sicherheitsgründen zwischen den einzelnen Übergabevorgängen zwischen Querförderer und Längsförderer so viel Zeit läßt, daß die Bretter auf dem Längsförderer mit Sicherheit nicht übereinanderliegen, was im nachfolgenden Besäumsäge-Aggregat zu Schwierigkeiten führen würde. In der Praxis führt dies dazu, daß die Folge der auf dem Längsförderer beförderten Bretter durch große Abstände zwischen den Brettern gekennzeichnet ist.

Der Erfindung liegt demgegenüber die Aufgabe zugrunde, eine Fördereinrichtung der eingangs genannten Art dahingehend weiterzubilden, daß die Übergabe vom Querförderer auf den Längsförderer mit größtmöglicher Geschwindigkeit abläuft und daß die Folge der Bretter auf dem Längsförderer praktisch keine oder nur kleine - wenn die Besäummaschine verstellt werden muß - Zwischenräume zwischen den Schmalseiten der aufeinanderfolgenden Bretter mehr zeigt.

Diese Aufgabe wird zum einen dadurch gelöst, daß der Längsförderer im Bereich der Übergabestation aufweist:
a) Mindestens eine, das stromabwärtige Ende des Holzerzeugnisses ergreifende Längs-Fördereinrichtung,
b) mindestens eine, den mittleren Abschnitt des Holzerzeugnisses von unten abstützende Auflage,
c) mindestens eine, oberhalb der Auflage angeordnete und von dem Holzerzeugnis nach oben wegschwenkbare Niederhalte-Rolle, und
d) eine Programmsteuereinheit zum Betätigen des Querförderers, der Längs-Fördereinrichtung und der Niederhalte-Rolle.

Die der Erfindung zugrundeliegende Aufgabe wird bei einer Fördereinrichtung der eingangs genannten Art ferner dadurch gelöst, daß der Längsförderer im Bereich der Übergabestation aufweist:
a) Mindestens eine, das stromabwärtige Ende des Holzerzeugnisses ergreifende Längs-Fördereinrichtung,
b) mindestens eine, auf den mittleren Abschnitt des Holzerzeugnisses von oben einwirkende Unterdruck-Halteeinrichtung,
c) mindestens eine, von den Holzerzeugnissen nach unten wegschwenkbare Andrück-Rolle,
d) eine Programmsteuereinheit zum Betätigen der Querförderers, der Längsförder-Einrichtung und der Andrück-Rolle.

Die der Erfindung zugrundeliegende Aufgabe wird auf diese Weise vollkommen gelöst.

Dadurch, daß ein zuerst in den Bereich der Übergabestation übergebenes Brett auf der Auflage aufliegt, bzw. bei der als zweites genannten "Kopfüber-Lösung" von der Unterdruck-Halteeinrichtung fixiert und dann in beiden Fällen von der Längs-Fördereinrichtung am stromabwärtigen Ende ergriffen und weggefördert wird, während andererseits die Niederhalte- bzw. Andrück-Rollen vom Holzerzeugnis wegschwenkbar sind, kann, noch während sich das hintere Ende des Bretts im Bereich der Auflage bzw. der Halteeinrichtung befindet, das nächste Brett übergeben werden, auch wenn dies mit seinem stromabwärtigen Ende zunächst auf dem stromaufwärtigen, hinteren Ende des zuerst übergebenen Bretts aufliegt. Dieses wird nämlich unter dem später übergebenen Brett weggefördert, das dann mit seinem stromabwärtigen Ende vom stromaufwärtigen Ende des zuerst übergebenen Bretts abrutscht und damit in Förderrichtung des Längsförderers unmittelbar an das zuerst übergebene Brett anschließt. Durch Betätigen der Niederhalte- bzw. Andrück-Rollen kann dabei einerseits zum Übergeben eines weiteren Bretts ein seitlicher Zugang geschaffen, andererseits aber durch Andrücken der Bretter der erforderliche Druck zum Halten der Bretter erzeugt werden.

Die erfindungsgemäße Fördereinrichtung führt daher zu einem praktisch ununterbrochenen Fluß von Brettern auf dem Längsförderer, so daß die Förderleistung der Fördereinrichtung optimal ausgenutzt werden kann. Mit der erfindungsgemäßen Fördereinrichtung ist es beispielsweise möglich, zwischen 40 und 60 Bretter von jeweils 4 Metern Länge pro Minute zu übergeben.

Bei einer bevorzugten Ausgestaltung der Erfindung ist die Auflage als Unterdruck-Niederhalteeinrichtung und diese wiederum vorzugsweise als Unterdruckkästen ausgebildet, die an ihrer Oberseite Saugschlitze aufweisen.

Diese Maßnahme hat den Vorteil, daß die Holzerzeugnisse bei dem Ausführungsbeispiel mit der Auflage besser fixiert werden und daß durch Unterteilung der Einheit in mehrere Kästen die Leckverluste minimiert werden. Wenn nämlich ein Brett teilweise von der Unterdruck-Niederhalteeinrichtung weggefördert wurde, so tritt Leckluft nur in diejenigen axial begrenzten Kästen ein, auf denen kein Brett mehr aufliegt, während die übrigen Kästen noch mit vollem Unterdruck das Brett niederhalten.

Besonders bevorzugt ist dabei, wenn die Saugschlitze von axial verlaufenden Messerschneiden begrenzt werden, auf denen die Holzerzeugnisse aufliegen.

Diese Maßnahme hat den Vorteil, daß zum einen der Reibungswiderstand der Bretter auf den Unterdruckkästen so gering wie möglich gehalten wird, andererseits haben die Messerschneiden aber auch den Vorteil, daß sie eine axiale Ausrichtung der Bretter bewirken und die Bretter in einer einmal eingenommenen Förderrichtung verbleiben.

Bei weiteren bevorzugten Ausgestaltungen der Erfindung weist der Längsförderer im Bereich der Übergabestation ferner einen weiteren, das stromaufwärtige Ende des Holzerzeugnisses ergreifende Längs-Fördereinrichtung auf.

Diese Maßnahme hat den Vorteil, daß die übergebenen Bretter sowohl stromabwärts wie auch stromaufwärts der Unterdruckkästen angetrieben werden können. Die weitere Längs-Fördereinrichtung ist dabei vorzugsweise schaltbar ausgebildet, damit ein später übergebenes Brett, das mit seinem stromabwärtigen Ende auf dem stromaufwärtigen, rückwärtigen Ende des zuvor übergebenen Bretts aufliegt, an seinem stromaufwärtigen Ende nicht selbst gefördert wird, solange sein stromabwärtiges Ende nicht vom zuvor geförderten Brett abgerutscht ist. Erst dann wird die weitere Längs-Fördereinrichtung eingeschaltet, um auch das später übergebene Brett so schnell wie möglich auf dem Längsförderer voran zu bringen, zumal das stromabwärtige Ende des später übergebenen Bretts im wesentlichen noch auf den Unterdruckkästen aufliegt, die keine eigene Förderwirkung entfalten.

Bei einer weiteren bevorzugten Variante der Erfindung überlappen daher die Unterdruck-Niederhalteeinrichtung und mindestens eine der Längs-Fördereinrichtungen einander in Förderrichtung des Längsförderers. Diese Maßnahme hat den Vorteil, daß ein übergebenes Brett gleichzeitig mittels Unterdruck niedergehalten und mittels der Längs-Fördereinrichtung gefördert werden kann.

Die Position der Niederhalte-Rollen in Förderrichtung kann nach verschiedenen Gesichtspunkten optimiert werden. Besonders bevorzugt sind jedoch Ausführungsbeispiele mit einer, zwei oder drei Niederhalte-Rollen, wobei vorzugsweise eine erste Niederhalte-Rolle am stromaufwärtigen Ende, eine zweite Niederhalte-Rolle in der Längsmitte und eine dritte Niederhalte-Rolle am stromabwärtigen Ende der Unterdruck-Niederhalteeinrichtung angeordnet sind.

Auf diese Weise ist es vorteilhaft möglich, in den Übergabe- bzw. Förderprozeß gezielt einzugreifen, indem z.B. die Niederhalte-Rollen separat angesteuert werden, um den Übergabe-bzw. Förderprozeß bestmöglich zu unterstützen.

Bei weiteren besonders bevorzugten Ausführungsformen der Erfindung ist mindestens eine Ausrichtvorrichtung am Längsförderer angeordnet, wie dies an sich aus dem Dokument US-A-4 778 044 bekannt ist.

Diese Maßnahme hat den Vorteil, daß die übergebenen Bretter sogleich in ihrer Längsrichtung ausgerichtet werden können, damit sie alsdann in Förderrichtung mit hoher Geschwindigkeit weitertransportiert werden können, ohne seitlich von der vorgesehenen Förderrichtung auszuweichen.

Bevorzugt ist, wenn eine erste Ausrichteinrichtung am stromaufwärtigen Ende der Unterdruck-Niederhalteeinrichtung angeordnet ist.

Diese Maßnahme hat den Vorteil, daß das später übergebene Brett, das zunächst nur mit seinem stromaufwärtigen Ende auf dem Längsförderer aufliegt, dort bereits ausgerichtet werden kann, während sein stromabwärtiges Ende noch auf dem zuvor übergebenen Brett aufliegt.

Bei weiteren Varianten der Erfindung ist daher eine zweite Ausrichtvorrichtung am stromabwärtigen Ende der Unterdruck-Niederhalteeinrichtung angeordnet.

Diese Maßnahme dient dazu, um das später übergebene Brett, nachdem es bereits am stromaufwärtigen Ende mittels der ersten Ausrichtvorrichtung ausgerichtet wurde, nun auch am stromabwärtigen Ende auszurichten.

Dies gelingt besonders gut dann, wenn die zweite Ausrichtvorrichtung geringfügig stromaufwärts der dritten Niederhalte-Rolle angeordnet ist.

Bei weiteren bevorzugten Ausführungsbeispielen der Erfindung ist am stromabwärtigen Ende der Auflage eine in Förderrichtung wirksame Rückhaltevorrichtung für die Holzerzeugnisse angeordnet.

Diese Maßnahme hat den Vorteil, daß der Strom der Holzerzeugnisse auf dem Längsförderer nach Belieben angehalten werden kann, beispielsweise um eine nachfolgende Besäummaschine zu justieren.

Wenn bei einer weiteren Fortbildung dieses Ausführungsbeispiels die Rückhaltevorrichtung nach Art einer Blende ausgebildet ist, insbesondere in einem Abstand oberhalb der Auflage wirksam ist, so kann mit der Rückhaltevorrichtung auch eine Selektion innerhalb des Stromes von Holzerzeugnissen vorgenommen werden. Insbesondere ist es mit der letztgenannten Variante möglich, daß als zweites geförderte Brett, das mit seinem stromabwärtigen Ende auf dem stromaufwärtigen, hinteren Ende des zuerst geförderten Bretts aufliegt, zurückzuhalten, damit es mit Sicherheit vom zuerst geförderten Brett abrutscht und nicht etwa durch Reibung oder dgl. in unerwünschter Weise vom ersten Brett mitgenommen wird, wenn dieses die erfindungsgemäße Fördereinrichtung wieder verläßt.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematisierte Seitenansicht eines ersten Ausführungsbeispiels einer erfindungsgemäßen Fördereinrichtung;
- Fig. 2: eine Draufsicht auf die Fördereinrichtung gemäß Fig. 1 in der Ebene II-II von Fig. 1;
- Fig. 3: im vergrößerten Maßstab einen Querschnitt, quer zur Fördereinrichtung, durch einen Unterdruckkasten, wie er bei einer Fördereinrichtung gemäß Fig. 1 und 2 Verwendung finden kann;
- Fig. 4 bis 7: Darstellungen, ähnlich Fig. 1, jedoch noch weiter schematisiert und für verschiedene Arbeitsphasen des in den Fig. 1 und 2 dargestellten Ausführungsbeispiels;
- Fig. 8: eine Seitenansicht eines weiteren Ausführungsbeispiels einer erfindungsgemäßen Fördereinrichtung.

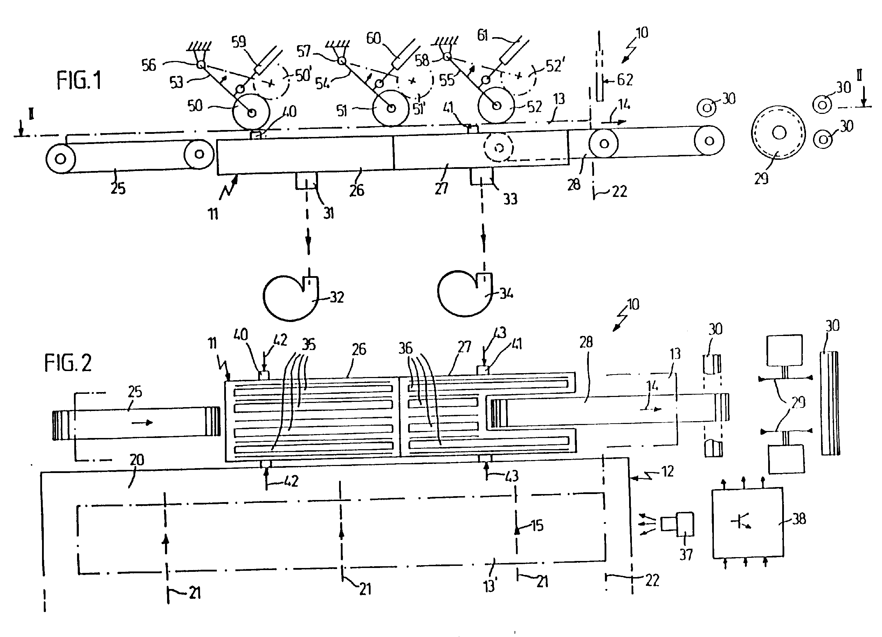

In Fig. 1 und 2 bezeichnet 10 insgesamt eine Fördereinrichtung für Holzerzeugnisse mit mindestens einer flachen Seite, insbesondere für Bretter.

Die Fördereinrichtung 10 umfaßt einen Längsförderer 11 sowie einen Querförderer 12, auf denen die Bretter 13 gefördert werden sollen. Mit 14 ist die Förderrichtung des Längsförderers 11 und mit 15 die Förderrichtung des Querförderers 12 bezeichnet. Man erkennt, daß die Förderrichtungen 14, 15 unter 90° zueinander verlaufen.

Auf einem Tisch 20 des Querförderers 12 werden die Bretter 13 mit ihrer Längserstreckung voran aus einem in Fig. 2 nicht dargestellten, noch weiter stromaufwärts angeordneten Aggregat herangebracht. Hierzu dienen im Tisch 20 angeordnete Förderbänder 21 o. dgl., mit denen ein Transport der Bretter 13 in der Förderrichtung 15 des Querförderers 12 möglich ist. Die Bretter 13 werden auf dem Querförderer 12 so ausgerichtet, daß sie mit ihrem in Fig. 2 rechten Ende entlang einer raumfesten Linie, nämlich einer sog. Holzflucht 22, liegen.

In Fig. 2 ist das bereits auf den Längsförderer 11 übergebene Brett mit 13 und das nächste, noch auf dem Querförderer 12 bereitgehaltene Brett mit 13' bezeichnet.

Der Längsförderer 11 umfaßt am stromaufwärtigen Ende einen ersten Bandförderer 25, an den sich in Förderrichtung eine Auflage vorzugsweise einen ersten Unterdruckkasten 26 und ein zweiter Unterdruckkasten 27 anschließen. Weiter stromabwärts folgt ein zweiter Bandförderer 28, der sich in Förderrichtung teilweise mit dem zweiten Unterdruckkasten 27 überlappt, wie aus Fig. 2 deutlich erkennbar ist.

Weiter stromabwärts des Längsförderers 11 sind Kreissägen 29 und zugehörige Walzen 30 angeordnet, wie dies an sich bekannt ist.

Der erste Unterdruckkasten 26 ist über einen Stutzen 31 mit einem Sauggebläse 32 verbunden, während der zweite Unterdruckkasten 27 in ähnlicher Weise über einen Stutzen 33 an ein weiteres Sauggebläse 34 angeschlossen ist. Es versteht sich dabei, daß die Zahl von zwei Unterdruckkästen 26, 27 mit ihren zugehörigen Elementen nur beispielhaft zu verstehen ist, weil die durch die Unterdruckkästen 26, 27 gebildete Unterdruck-Niederhalteeinrichtung auch aus einer kleineren oder größeren Anzahl von Unterdruckkästen bestehen kann.

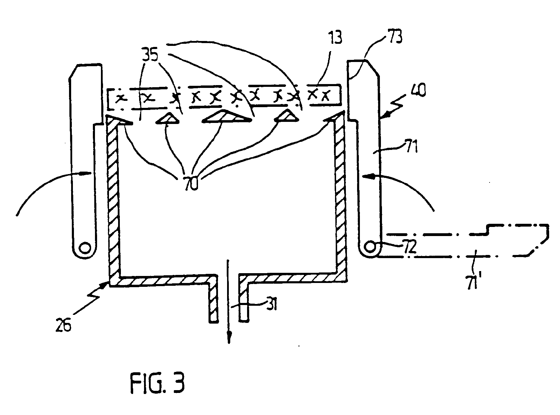

Wie man aus Fig. 2, und noch deutlicher aus Fig. 3 erkennen kann, sind die Unterdruckkästen 26, 27 an ihrer Oberseite mit Saugschlitzen 35, 36 versehen, mittels derer die Bretter 13 durch Unterdruck auf der Oberseite der Unterdruckkästen 26, 27 niedergehalten werden können.

In Fig. 2 ist ferner mit 37 eine Flächenkamera bezeichnet, mit der die ankommenden Bretter 13' erfaßt werden können. Zum Steuern sämtlicher Aggregate der Fördereinrichtung 10 dient eine in Fig. 2 nur äußerst schematisch angedeutete Programmsteuereinheit 38, deren Innenaufbau und externe Verdrahtung der Übersichtlichkeit halber im einzelnen nicht dargestellt sind.

Am Längsförderer 11 sind ferner noch eine hintere Ausrichtvorrichtung 40 sowie eine vordere Ausrichtvorrichtung 41 angeordnet, wobei die hintere Ausrichtvorrichtung 40 im Bereich des stromaufwärtigen Endes des ersten Unterdruckkastens 26 angeordnet ist, während sich die vordere Ausrichtvorrichtung 41 etwa auf der Höhe der Längsmitte des zweiten Unterdruckkastens 27 befindet.

In Fig. 2 ist mit Pfeilen 42 und 43 die Wirkungsweise der Ausrichtvorrichtungen 40, 41 angedeutet, die dazu dienen, um übergebene Bretter 13 im Bereich des Längsförderers 11 in dessen Förderrichtung auszurichten.

Wie Fig. 1 zeigt, sind oberhalb des Längsförderers 11 insgesamt drei Andrückrollen 50, 51, 52 angeordnet. Die erste Andrückrolle 50 befindet sich etwa auf der Höhe der hinteren Ausrichtvorrichtung 40 am stromaufwärtigen Ende des ersten Unterdruckkastens 26. Die zweite Andrückrolle 51 befindet sich etwa in der Längsmitte der von den Unterdruckkästen 26, 27 gebildeten Unterdruck-Niederhalteeinrichtung, während sich die dritte Andrückrolle 52 kurz vor dem stromabwärtigen Ende des zweiten Unterdruckkastens 27, geringfügig stromabwärts der vorderen Ausrichtvorrichtung 41 befindet.

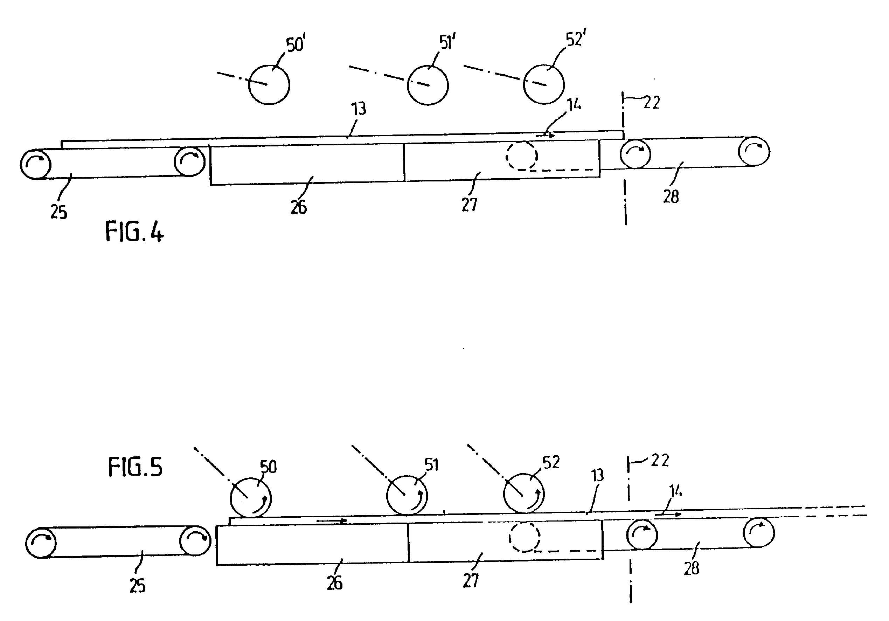

Die Andrückrollen 50, 51, 52 sind an einem Ende von schwenkbaren Armen 53, 54, 55 angeordnet, deren anderes Ende an raumfesten Punkten 56, 57, 58 schwenkbar gelagert ist. Mittels Kolben-Zylinder-Einheiten 59, 60, 61 können die Andrückrollen 50, 51, 52 daher entweder in die in Fig. 1 durchgezogen eingezeichnete Andrückstellung verschwenkt werden oder aber, nach oben weg, in eine in Fig. 1 strichpunktiert eingezeichnete, nach oben weggeschwenkte Stellung 50', 51', 52'. In dieser abgeschwenkten Stellung befinden sich die Andrückrollen 50', 51', 52' in verhältnismäßig großem Abstand oberhalb des Längsförderers 11, um einen zeitlichen Zugang für Bretter vom Querförderer 12 zu erhalten, wie dies weiter unten anhand der Fig. 4 bis 7 noch erläutert werden wird.

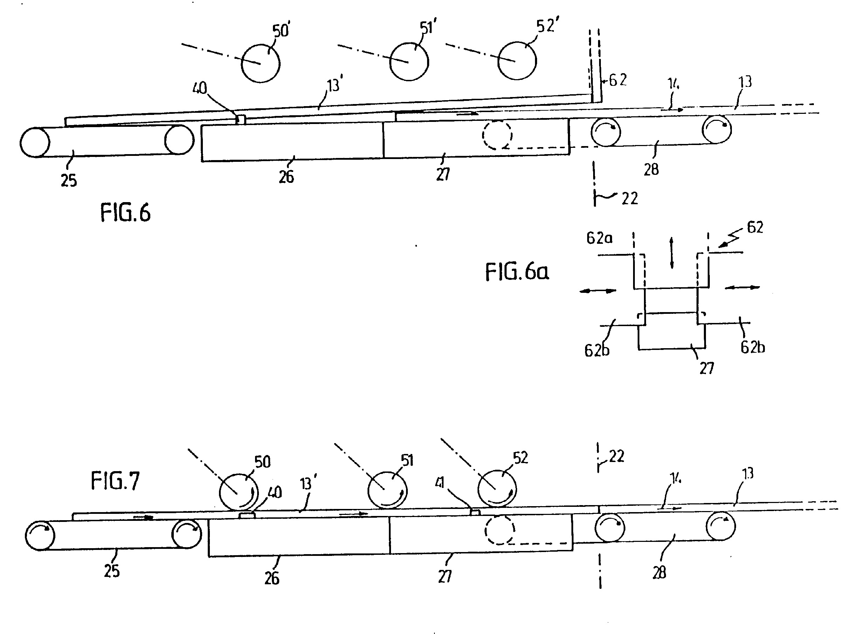

Mit 62 ist in Fig. 1 noch eine Rückhaltevorrichtung bezeichnet, die etwa auf der Höhe der Holzflucht 22, d.h. am stromabwärtigen Ende der durch die Unterdruckkästen 26, 27 gebildeten Auflage positioniert ist. Diese Rückhaltevorrichtung wird mit ihren Eigenschaften weiter unten anhand der Fig. 6a noch erläutert werden.

Betrachtet man nun nochmals Fig. 3, so erkennt man weitere Einzelheiten, insbesondere, daß die zwischen den Saugschlitzen 35 verbliebenen Stege als Messerschneiden 70 ausgebildet sind, auf denen die Bretter 13 demnach nur entlang von in Förderrichtung verlaufenden Graden aufliegen. Es liegt auf der Hand, daß dies die Ausrichtung der Bretter 13 auf dem Längsförderer 11 verbessert.

Man erkennt aus Fig. 3 ferner, daß die Ausrichtvorrichtungen, z.B. die hintere Ausrichtvorrichtung 40, in einfacher Weise als Schwenkarme 71 ausgebildet werden können, die um eine untere Achse 72 in einer Vertikalebene senkrecht zur Förderrichtung des Längsförderers 11 verschwenkt werden können. In der in Fig. 3 strichpunktiert eingezeichneten Stellung 71' befinden sich die Ausrichtvorrichtungen daher außerhalb der durch die Oberseite der Unterdruckkästen 26, 27 gebildeten Auflageebene des Längsförderers 11, während sie in der in Fig. 3 durchgezogen eingezeichneten Stellung ihre Ausrichtfunktion ausüben. Hierzu sind die Schwenkarme 71 an ihrem oberen freien Ende mit Backen 73 versehen, die seitlich an den Brettern 13 angreifen können und diese auf dem Längsförderer 11 in Längsrichtung ausrichten.

Die Wirkungsweise der Fördereinrichtung 10 gemäß den Figuren 1 bis 3 soll nun nachstehend anhand von Phasenbildern der Fig. 4 bis 7 erläutert werden:

Fig. 4 zeigt eine Ausgangsstellung, bei der die Andrückrollen 50', 51'und 52'sich in der nach oben abgeschwenkten Stellung befinden. Ein erstes Brett 13 kann nun vom Querförderer 12 in Richtung des Pfeils 15 (Fig. 2) von der Seite auf die Oberseite des Längsförderers 11 übergeben werden, weil durch die weggeschwenkten Andrückrollen 50', 51', 52' oberhalb des Längsförderers 11 ein genügend großer Freiraum vorhanden ist. Die axiale Lage des zuerst geförderten Bretts 13 ist durch die erwähnte Holzflucht 22 definiert, die in etwa in der Längsmitte des zweiten Bandförderers 28 kurz stromabwärts des zweiten Unterdruckkastens 27 verläuft.

Das zuerst übergebene Brett 13 kann aus der Position der Fig. 4 heraus durch Einschalten der Bandförderer 25 und 26 in Richtung des Pfeils 14 gefördert werden, wobei die Unterdruckkästen 26, 27 für eine ausreichende Niederhaltung sorgen und das Brett 13 am vorderen und am hinteren Ende von den Bandförderern 25, 28 ergriffen wird.

Fig. 5 zeigt eine nächste Arbeitsphase der Fördereinrichtung 10, die zeitlich kurz hinter der der Fig. 4 liegt. Man erkennt, daß das Brett 13 bereits ein Stück in Richtung des Pfeils 14 gefördert wurde, weil sein hinteres, stromaufwärtiges Ende bereits den ersten Bandförderer 25 verlassen hat. Dieser wird danach abgeschaltet. Die Andrückrollen 50, 51, 52 wurden in der Zwischenzeit nach unten geschwenkt, um das Brett 13 auf den Unterdruckkästen 26, 27 niederzuhalten zu führen und ggf. auch anzutreiben, wenn die Andrückrollen 50, 51, 52 mit einem eigenen Antrieb versehen sind.

Die Andrückrollen 50, 51, 52 werden nun wieder in die abgeschwenkte Position 50', 51', 52' nach oben weggeschwenkt, wie Fig. 6 für die nächste zeitliche Phase zeigt. Da nun oberhalb des Längsförderers 11 wieder genügend Freiraum vorhanden ist, kann ein zweites Brett 13' vom Querförderer 12 in Richtung des Pfeils 15 übergeben werden. Die axiale Lage des zweiten Bretts 13' ist dabei wiederum durch die Holzflucht 22 definiert. Dies alles geschieht in einer Zeit, in der das erste Brett 13 den Längsförderer 11 noch nicht verlassen hat. Wie man nämlich aus Fig. 6 deutlich erkennen kann, befindet sich das stromaufwärtige Ende des ersten Bretts 13 noch innerhalb des Wirkungsbereichs des Längsförderers 11, nämlich noch auf der Oberseite des zweiten Unterdruckkastens 27. Da der zweite Bandförderer 28 bis in den zweiten Unterdruckkasten 27 hineinreicht, ist eine ausreichende Förderwirkung durch den zweiten Bandförderer 28 für das erste Brett 13 sichergestellt.

Da der erste Bandförderer 25 in dieser Phase des Geschehens abgeschaltet ist, wird das zweite Brett 13' zunächst noch nicht gefördert. Die Zeit des noch verbleibenden Abförderns des ersten Bretts 13 wird jedoch bereits genutzt, indem die hintere Ausrichtvorrichtung 40 hochgeschwenkt wird und das hintere, stromaufwärtige Ende des zweiten Bretts 13 ausrichtet. Am Ende der durch die Unterdruckkästen 26, 27 gebildeten Auflage kann, wie bereits weiter oben zu Fig. 1 erläutert, eine Rückhaltevorrichtung 62 vorgesehen sein, deren Einzelheiten in Fig. 6a schematisch angedeutet sind.

Die Rückhaltevorrichtung 62 kann aus einem Blech, Rahmen oder dgl. 62a bestehen, der von oben in vertikaler Richtung auf die Auflageebene zu verfahrbar ist, die durch die Unterdruckkästen 26, 27 definiert wird.

Wie man deutlich der Seitendarstellung der Fig. 6 entnehmen kann, ist es auf diese Weise möglich, daß als zweites geförderte Brett 13' an seiner vorderen Stirnseite anzuhalten, so daß eine Mitnahme durch das darunter weg geförderte erste Brett 13 nicht möglich ist.

Man kann auf diese Weise den ersten Bandförderer 25 sogar eingeschaltet lassen, wenn die Arbeitsphase der Fig. 6 erreicht ist, weil selbst bei eingeschaltetem ersten Bandförderer 25 ein unerwünschtes Abfördern des Bretts 13' nicht zu befürchten ist.

Wenn das untere Brett 13 mit seinem hinteren Ende die Holzflucht 22 passiert hat, so rutscht das obere Brett 13' mit seinem vorderen Ende von selbst nach unten weg und kann unter der Rückhaltevorrichtung 62 hindurch mittels des zweiten Bandförderers 28 abgefördert werden.

Fig. 6a zeigt das obere Rückhalteelement 62a, wie es zuvor erläutert wurde. Es versteht sich jedoch, daß die Rückhaltevorrichtung 62 auch nach Art einer Blende ausgebildet werden kann und damit z.B. noch seitliche Rückhalteelemente 62b oder zusätzlich ein in Fig. 6a nicht gezeigtes unteres Rückhalteelement aufweist, so daß beliebige lichte Querschnitte für den durchzulassenden bzw. zurückzuhaltenden Strom von Brettern eingestellt werden können.

Sobald nun das erste Brett 13 mit seinem hinteren Ende die Holzflucht 22 passiert hat, rutscht das vordere, stromabwärtige Ende des zweiten Bretts 13' vom ersten Brett 13 ab und gleichzeitig werden die Andrückrollen 50, 51, 52 wieder in ihre untere Position abgeschwenkt, wie in Fig. 7 erkennbar ist. In diesem Zeitpunkt wird auch die vordere Ausrichtvorrichtung 41 aktiviert, um das vordere Ende des zweiten Bretts 13' ebenfalls auszurichten. Gleichzeitig wird der erste Bandförderer 25 wieder eingeschaltet, so daß das zweite Brett 13' nun am vorderen und am hinteren Ende durch die Bandförderer 28 und 25 ergriffen und in Richtung des Pfeiles 14 gefördert wird.

Man erkennt aus Fig. 7 deutlich, daß die Bretter 13 und 13' dabei in Förderrichtung 14 dicht aneinanderliegen, so daß auf dem Längsförderer 11 ein ununterbrochener Strom von Brettern 13 entsteht.

Das zweite Brett 13' befindet sich in Fig. 7 in derselben Position, in der sich das erste Brett 13 in Fig. 4 befand. Die Andrückrollen 50, 51, 52 können also nun wieder nach oben verschwenkt werden, damit das Spiel der Phasen der Fig. 4, 5, 6 und 7 erneut beginnen kann.

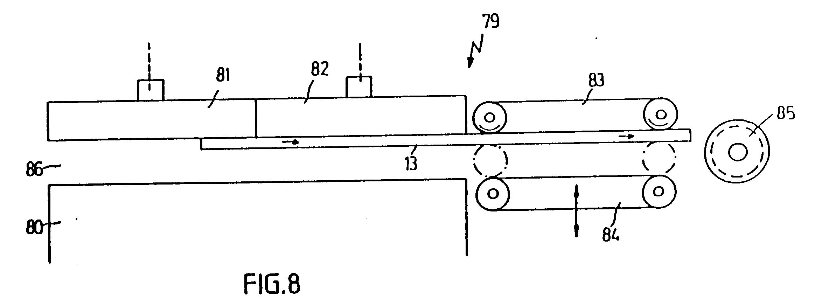

Fig. 8 zeigt eine Variante der Fördereinrichtung, bei der der Längsförderer 79 einen Aufgabetisch 80 aufweist, über dem Unterdruckkästen 81 und 82 angeordnet sind. Die Unterdruckkästen 81, 82 sind von derselben Bauart wie die Unterdruckkästen 26, 27 des Ausführungsbeispiels der Fig. 1 bis 7, mit der einzigen Abweichung, daß sie kopfüber mit ihrer Saugseite nach unten angeordnet sind.

Am stromabwärtigen Ende der Unterdruckkästen 81, 82 sind ein erster, raumfester Bandförderer 83 und ein zweiter, in der Vertikalen verfahrbarer Bandförderer 84 angeordnet. Weiterhin schließt sich in Förderrichtung eine Kreissäge 85 an, die von herkömmlicher Ausführung ist.

Die Fördereinrichtung der Fig. 8 unterscheidet sich von derjenigen der Fig. 1 bis 7 lediglich dadurch, daß die vom Querförderer in einer Richtung senkrecht zur Zeichenebene der Fig. 8 übergebenen Bretter 13 mittels Unterdruck an ihrer Oberseite gehalten und mittels des ersten Bandförderers 83 abgefördert werden. Zum seitlichen Übergeben von Brettern 13 in den Zwischenraum 86 zwischen Aufgabetisch 80 und Unterdruckkästen 81, 82 wird der zweite Bandförderer 84 kurzzeitig nach unten weggefahren, damit ein genügend großer Freiraum entsteht. Sobald die Bretter 13 in den Bereich des Längsförderers 79 übergeben wurden, wird der zweite Bandförderer 84 in Vertikalrichtung wieder nach oben verfahren, um das Abfördern der Bretter 13 zur Kreissäge 85 hin zu unterstützen.

Es versteht sich, daß die Fördereinrichtung der Fig. 8 sinngemäß mit sämtlichen Einzelaggregaten der Fördereinrichtung 10 gemäß den Fig. 1 bis 7 ausgestattet sein kann, ohne daß dies nochmals im einzelnen aufgezählt und erläutert werden muß.

## Patentansprüche

1. Fördereinrichtung für Holzerzeugnisse mit mindestens einer flachen Seite, insbesondere Bretter (13), mit einem Querförderer (12) und einem Längsförderer (11), deren Förderrichtungen (14, 15) in einer horizontalen Ebene einen Winkel von im wesentlichen 90° miteinander bilden, wobei der Querförderer (12) in Förderrichtung stromaufwärts des Längsförderers (11) angeordnet ist, die Holzerzeugnisse quer zu deren Längsausdehnung fördert und sie in einer Übergabestation an den Längsförderer (11) übergibt, dadurch gekennzeichnet, daß der Längsförderer (11) im Bereich der Übergabestation aufweist:
a) Mindestens eine, das stromabwärtige Ende des Holzerzeugnisses ergreifende Längs-Fördereinrichtung (28),
b) mindestens eine, den mittleren Abschnitt des Holzerzeugnisses von unten abstützende Auflage,
c) mindestens eine, oberhalb der Auflage angeordnete und von den Holzerzeugnissen nach oben wegschwenkbare Niederhalte-Rolle (50, 51, 52), und
d) eine Programmsteuereinheit (38) zum Betätigen des Querförderers (12) der Längs-Fördereinrichtung (28) und der Niederhalte-Rolle (50, 51, 52).

2. Fördereinrichtung nach Anspruch 1, dadurch gekennzeichnet, daß die Auflage als Unterdruck-Niederhalteeinrichtung (26, 27) ausgebildet ist.

3. Fördereinrichtung nach Anspruch 2, dadurch gekennzeichnet, daß die Unterdruck-Niederhalteeinrichtung als Unterdruckkästen (26, 27) ausgebildet ist, die an ihrer Oberseite Saugschlitze (35, 36) aufweisen.

4. Fördereinrichtung nach Anspruch 3, dadurch gekennzeichnet, daß die Saugschlitze (35, 36) von axial verlaufenden Messerschneiden (70) begrenzt werden, auf denen die Holzerzeugnisse aufliegen.

5. Fördereinrichtung nach einem oder mehreren der Ansprüche 1 bis 4, dadurch gekennzeichnet, daß der Längsförderer (11) im Bereich der Übergabestation ferner eine weitere, das stromaufwärtige Ende des Holzerzeugnisses ergreifende Längs-Fördereinrichtung (25) aufweist.

6. Fördereinrichtung nach einem oder mehreren der Ansprüche 1 bis 5, dadurch gekennzeichnet, daß die Auflage und die Längs-Fördereinrichtung (25, 28) einander in Förderrichtung (14) des Längsförderers (11) überlappen.

7. Fördereinrichtung nach einem oder mehreren der Ansprüche 1 bis 6, dadurch gekennzeichnet, daß eine erste Niederhalte-Rolle (50) am stromaufwärtigen Ende der Auflage angeordnet ist.

8. Fördereinrichtung nach einem oder mehreren der Ansprüche 1 bis 7, dadurch gekennzeichnet, daß eine zweite Niederhalte-Rolle (51) in der Längsmitte der Auflage angeordnet ist.

9. Fördereinrichtung nach einem oder mehreren der Ansprüche 1 bis 8, dadurch gekennzeichnet, daß eine dritte Niederhalte-Rolle (52) am stromabwärtigen Ende der Auflage angeordnet ist.

10. Fördereinrichtung nach einem oder mehreren der Ansprüche 1 bis 9, dadurch gekennzeichnet, daß mindestens eine Ausrichtvorrichtung (40, 41) am Längsförderer (11) angeordnet ist.

11. Fördereinrichtung nach Anspruch 10, dadurch gekennzeichnet, daß eine erste Ausrichtvorrichtung (40) am stromaufwärtigen Ende der Unterdruck-Niederhalteeinrichtung (26, 27) angeordnet ist.

12. Fördereinrichtung nach Anspruch 10 oder 11, dadurch gekennzeichnet, daß eine zweite Ausrichtvorrichtung (41) am stromabwärtigen Ende der Unterdruck-Niederhalteeinrichtung (26, 27) angeordnet ist.

13. Fördereinrichtung nach Anspruch 9 und 12, dadurch gekennzeichnet, daß die zweite Ausrichtvorrichtung (41) geringfügig stromaufwärts der dritten Niederhalte-Rolle (52) angeordnet ist.

14. Fördereinrichtung nach einem oder mehreren der Ansprüche 1 bis 13, dadurch gekennzeichnet, daß am stromabwärtigen Ende der Auflage eine in Förderrichtung des Längsförderers (11) wirksame Rückhaltevorrichtung (62) für die Holzerzeugnisse angeordnet ist.

15. Fördereinrichtung nach Anspruch 14, dadurch gekennzeichnet, daß die Rückhaltevorrichtung (62) nach Art einer Blende ausgebildet ist.

16. Fördereinrichtung nach Anspruch 14 oder 15, dadurch gekennzeichnet, daß die Rückhaltevorrichtung (62) in einem Abstand oberhalb der Auflage wirksam ist.

17. Fördereinrichtung für Holzerzeugnisse mit mindestens einer flachen Seite, insbesondere Bretter (13), mit einem Querförderer und einem Längsförderer (79), deren Förderrichtungen in einer horizontalen Ebene einen Winkel von im wesentlichen 90° miteinander bilden, wobei der Querförderer in Förderrichtung stromaufwärts des Längsförderers (79) angeordnet ist, die Holzerzeugnisse quer zu deren Längsausdehnung fördert und sie in einer Übergabestation an den Längsförderer (79) übergibt, dadurch gekennzeichnet, daß der Längsförderer (79) im Bereich der Übergabestation aufweist:
a) Mindestens eine, das stromabwärtige Ende des Holzerzeugnisses ergreifende Längs-Fördereinrichtung (83),
b) mindestens eine, auf den mittleren Abschnitt des Holzerzeugnisses von oben einwirkende Unterdruck-Halteeinrichtung (81, 82),
c) mindestens eine, von den Holzerzeugnissen nach unten schwenkbare Andrück-Rolle (84), und
d) eine Programmsteuereinheit zum Betätigen des Querförderers, der Längs-Fördereinheit (83) und der Andrück-Rolle (84).

## Claims

1. Conveyor system for timber products having at least one flat side, in particular boards (13), the system comprising a transverse conveyor (12) and a linear conveyor (11) the conveying directions (14, 15) of which include between them an angle of substantially 90° in a horizontal plane, and the transverse conveyor (12) being arranged upstream of the linear conveyor (11) in the conveying direction, and being adapted for feeding the timber products in a direction perpendicular to their longitudinal extension and for transferring them to the linear conveyor (11) at a the transfer station, **wherein** the said linear conveyor (11) comprises, in the area of the transfer station
a) at least one linear conveyor means (28) gripping the downstream end of the said timber product,
b) at least one support supporting the middle portion of the said timber product from below,
c) at least one jack roller (50, 51, 52) arranged above the said support and capable of being pivoted in upward direction, away from the said timber product, and
d) a sequence control unit (38) for actuating the said transverse conveyor (12), the said linear conveyor means (28) and the said jack roller (50, 51, 52).

2. Conveyor system according to claim 1, **wherein** the said support takes the form of a vacuum jack means (26, 27).

3. Conveyor system according to claim 2, **wherein** the said vacuum jack means is designed in the form of vacuum boxes (26, 27) with intake slots (35, 36) provided in their upper faces.

4. Conveyor system according to claim 3, **wherein** the said intake slots (35, 36) are delimited by axial cutter blades (70) on which the said timber products are supported.

5. Conveyor system according to one or more of claims 1 to 4, **wherein** the said linear conveyor (11) further comprises, in the area of the transfer station, a linear conveyor device (25) gripping the upstream end of the said timber product.

6. Conveyor system according to one or more of claims 1 to 5, **wherein** the said support and the said linear conveyor means (25, 28) overlap each other in the feeding direction (14) of the said linear conveyor (11).

7. Conveyor system according to one or more of claims 1 to 6, **wherein** a first jack roller (50) is provided at the upstream end of the said support.

8. Conveyor system according to one or more of claims 1 to 7, **wherein** a second jack roller (51) is provided in the middle of the longitudinal extension of the said support.

9. Conveyor system according to one or more of claims 1 to 8, **wherein** a third jack roller (52) is provided at the downstream end of the said support.

10. Conveyor system according to one or more of claims 1 to 9, **wherein** the said linear conveyor (11) is provided with at least one aligning means (40).

11. Conveyor system according to claim 10, **wherein** a first aligning device (40) is arranged at the upstream end of the said vacuum jack means (26, 27).

12. Conveyor system according to claim 10 or 11, **wherein** a second aligning device (41) is arranged at the downstream end of the said vacuum jack means (26, 27).

13. Conveyor system according to claims 9 and 12, **wherein** the said second aligning means (41) is arranged a short way upstream of the said third jack roller (52).

14. Conveyor system according to one or more of claims 1 to 13, **wherein** hold-back means (62) for the timber products acting in the conveying direction of the said linear conveyor (11) are arranged at the downstream end of the said support.

15. Conveyor system according to claim 14, **wherein** the said hold-back means (62) is designed in the form of a frame.

16. Conveyor system according to claim 14 or 15, **wherein** the said hold-back means (62) is active at a distance above the said support.

17. Conveyor system for timber products having at least one flat side, in particular boards (13), the system comprising a transverse conveyor and a linear conveyor (79) the conveying directions of which include between them an angle of substantially 90° in a horizontal plane, and the said transverse conveyor being arranged upstream of the said linear conveyor (79) in the conveying direction, and being adapted for feeding the timber products in a direction perpendicular to their longitudinal extension and for transferring them to the said linear conveyor (79) at a the transfer station, **wherein** the said linear conveyor (79) comprises, in the area of the said transfer station
a) at least one linear conveyor means (83) gripping the downstream end of the said timber product,
b) at least one vacuum holding means (81, 82) acting on the middle portion of the said timber product from above,
c) at least one pressure roller (84) arranged for being pivoted away from the said timber product in downward direction, and
d) a sequence control unit for actuating the said transverse conveyor, the said linear conveyor means (83) and the said pressure roller (84).

## Revendications

1. Dispositif de convoyage de pièces de bois présentant au moins une face plate, en particulier des planches (13), comportant un convoyeur transversal (12) et un convoyeur longitudinal (11) dont les sens de convoyage (14, 15) forment entre eux, dans un plan horizontal, un angle sensiblement égal à 90°, dans lequel le convoyeur transversal (12) est situé en amont du convoyeur longitudinal (11), dans le sens du convoyage, transporte les pièces de bois transversalement à leur extension longitudinale et les transfère dans un poste de transfert au convoyeur longitudinal (11), caractérisé en ce que le convoyeur longitudinal (11) comporte, dans la zone du poste de transfert :
a) au moins un dispositif de convoyage longitudinal (28) saisissant l'extrémité aval de la pièce de bois,
b) au moins un support soutenant du bas la partie centrale de la pièce de bois,
c) au moins un galet presseur (50, 51, 52) situé au-dessus du support et pouvant être éloigné des pièces de bois par pivotement vers le haut, et
d) une unité de commande programmée (38) destinée à actionner le convoyeur transversal (12) du dispositif de convoyage longitudinal (28) et du galet presseur (50, 51, 52).

2. Dispositif de convoyage selon la revendication 1, caractérisé en ce que le support est agencé sous la forme d'un dispositif presseur à dépression (26, 27).

3. Dispositif de convoyage selon la revendication 2, caractérisé en ce que le dispositif presseur à dépression est agencé sous la forme de caissons à dépression (26, 27) qui présentent des fentes d'aspiration (35, 36) sur leur face supérieure.

4. Dispositif de convoyage selon la revendication 3, caractérisé en ce que les fentes d'aspiration (35, 36) sont limitées par des tranchants de couteau (70) s'étendant axialement sur lesquels reposent les pièces de bois.

5. Dispositif de convoyage selon une ou plusieurs des revendications 1 à 4, caractérisé en ce que le convoyeur longitudinal (11) comporte, dans la zone du poste de transfert un autre dispositif de convoyage longitudinal (25), saisissant l'extrémité amont de la pièce de bois.

6. Dispositif de convoyage selon une ou plusieurs des revendications 1 à 5, caractérisé en ce que le support et le dispositif de convoyage longitudinal (25, 28) se recouvrent l'un l'autre dans le sens de convoyage (14) du convoyeur longitudinal (11).

7. Dispositif de convoyage selon l'une ou plusieurs des revendications 1 à 6, caractérisé en ce qu'un premier galet presseur (50) est prévu à l'extrémité amont du support.

8. Dispositif de convoyage selon une ou plusieurs des revendications & à 7, caractérisé en ce qu'un deuxième galet presseur (51) est prévu au milieu de la longueur du support.

9. Dispositif de convoyage selon une ou plusieurs des revendications 1 à 8, caractérisé en ce qu'un troisième galet presseur (52) est prévu à l'extrémité aval du support.

10. Dispositif de convoyage selon une ou plusieurs des revendications 1 à 9, caractérisé en ce qu'un dispositif d'orientation (40, 41) au moins est prévu sur le convoyeur longitudinal (11).

11. Dispositif de convoyage selon la revendication 10, caractérisé en ce qu'un premier dispositif d'orientation (40) est prévu à l'extrémité amont du dispositif presseur à dépression (26, 27).

12. Dispositif de convoyage selon la revendication 10 ou 11, caractérisé en ce qu'un deuxième dispositif d'orientation (41) est prévu à l'extrémité aval du dispositif presseur à dépression (26, 27).

13. Dispositif de convoyage selon les revendications 9 et 12, caractérisé en ce que le deuxième dispositif d'orientation (41) est situé légèrement en amont du troisième galet presseur (52).

14. Dispositif de convoyage selon une ou plusieurs des revendications 1 à 13, caractérisé en ce qu'à l'extrémité aval du support est prévu un dispositif de retenue (62), agissant dans le sens de convoyage du convoyeur longitudinal (11), pour les pièces de bois.

15. Dispositif de convoyage selon la revendication 14, caractérisé en ce que le dispositif de retenue (62) est agencé à la manière d'un diaphragme.

16. Dispositif de convoyage selon les revendications 14 ou 15, caractérisé en ce que le dispositif de retenue (62) opère à distance au-dessus du support.

17. Dispositif de convoyage de pièces de bois présentant au moins une face plate, en particulier des planches (13), comportant un convoyeur transversal et un convoyeur longitudinal (79) dont les sens de convoyage forment entre eux, dans un plan horizontal, un angle sensiblement égal à 90°, dans lequel le convoyeur transversal est situé en amont du convoyeur longitudinal (79), dans le sens du convoyage, transporte les pièces de bois transversalement à leur extension longitudinale et les transfère dans un poste de transfert au convoyeur longitudinal (79), caractérisé en ce que le convoyeur longitudinal (79) comporte, dans la zone du poste de transfert :
a) au moins un dispositif de convoyage longitudinal (83) saisissant l'extrémité aval de la pièce de bois,
b) au moins un dispositif de maintien à dépression (81, 82) agissant sur la partie centrale de la pièce de bois,
c) au moins un galet presseur (84) pouvant être pivoté vers le bas par les pièces de bois, et
d) une unité de commande programmée destinée à actionner le convoyeur transversal de l'unité de convoyage longitudinal (83) et du galet presseur (84).
